# Europäisches Patentamt

# European Patent Office

# Office européen des brevets

(19)

(11) Veröffentlichungsnummer: **0 020 894**
**A1**

(12) **EUROPÄISCHE PATENTANMELDUNG**

(21) Anmeldenummer: **80101884.7**

(22) Anmeldetag: **09.04.80**

(51) Int. Cl.³: **F 24 D 3/00**

(30) Priorität: **10.04.79 DE 2914470**

(43) Veröffentlichungstag der Anmeldung: **07.01.81**
**Patentblatt 81/1**

(84) Benannte Vertragsstaaten: **AT BE CH FR GB IT LI LU NL SE**

(71) Anmelder: **Deutsche Aiwa GmbH, Hammerweide, D-5760 Arnsberg 2 (DE)**

(72) Erfinder: **Schulte-Huermann, Paul, Am Altenberg 12, D-5760 Arnsberg 2 (DE)**

(74) Vertreter: **Fritz, Herbert, Dipl.-Ing., Mühlenberg 74, D-5760 Arnsberg 1 (DE)**

(54) **Vorgefertigtes Kupferrohr vorzugsweise für eine Fussbodenheizung.**

(57) Bei einem Kupferrohr für eine Fussbodenheizung sind mäanderförmige Windungen, wie sie nach dem Stand der Technik erst beim Verlegen auf der Baustelle gebildet werden, bereits fabrikatorisch geformt.

Dabei sind zwei Streifen (13) aus Aluminium aufgelegt und mit geraden Abschnitten (12) des Kupferrohres zwischen den Windungen verbunden. Die Aluminium-Streifen sind in Höhe des Rohrdurchmessers gewellt. Rohr und Streifen bilden eine Einheit, die ähnlich wie eine Matte als Rolle transportiert und durch Abrollen verlegt werden kann.

EP 0 020 894 A1

0020894

Patentanwalt

# Dipl.-Ing. H. Fritz

**5760 ARNSBERG 1**
Mühlenberg 74

- 1 -   01.04.1980/BS   80/223

Firma
Deutsche Alwa GmbH
Hammerweide

5760 Arnsberg 2

### Vorgefertigtes Kupferrohr vorzugsweise für eine Fußbodenheizung

Für Fußbodenheizungen werden meist leicht biegsame Kunststoffrohre verwandt. Oftmals werden jedoch Kupferrohre gefordert, im Hinblick auf die längere Lebensdauer und die bessere Wärmeleitfähigkeit von Kupfer. Es ist jedoch schwierig, an einem geraden Kupferrohr auf der Baustelle mit den dort zur Verfügung stehenden Hilfsmitteln die laut Plan vorgesehenen Bögen zu formen. Häufig gelingt dies nicht, und die verlegten Kupferrohre weisen nicht die laut Plan vorgesehenen Gestalt auf, oder sie liegen nicht gleichmäßig auf.

Hier setzt die Erfindung ein. Ihr liegt die Aufgabe zu Grunde, bei Verlegen der Kupferrohre für eine Fußbodenheizung die Baustellenarbeit zu erleichtern und eine plangerechte Lage der Rohre zu gewährleisten.

Diese Aufgabe wird durch Kupferrohre gelöst, die in der in den Patentansprüchen angegebenen Weise vorgefertigt sind.

/2

01.04.1980

00 20 894

Danach werden die Kupferrohre fabrikatorisch in eine mäanderförmige Form gebracht und mit einem oder mehreren Aluminiumstreifen derart verbunden, daß Matten entstehen, die für die Lagerung und den Transport aufgerollt werden können und die einfach durch Abrollen in eine ebene Form aufgelegt werden. Bei der Herstellung erhalten die Kupferrohre genau die nach Plan vorgesehene Form, die auch nach dem Abrollen beibehalten wird. Die Bauhöhe der Matten ist nich größer als der Rohrdurchmesser, da die Wellen der Aluminiumstreifen in den Räumen zwischen den Kupferrohren gebildet sind. Im Betrieb geben nicht nur die Kupferrohre, sondern auch die Aluminium-Streifen Wärme an den Estrich ab. Ein mit Matten nach der Erfindung ausgerüsteter Fußboden wird also schneller und gleichmäßiger aufgeheizt als dies mit herkömmlichen Kupferrohren der Fall ist. Durch Auseinanderziehen des oder der Aluminiumstreifen läßt sich auch auf der Baustelle noch der Abstand der geraden Rohrabschnitte voneinander vergrößern. Auf diese Weise kann man im Bedarfsfalle auch eine Abwinklung der geraden Rohrabschnitte voneinander erreichen, so daß sich eine leichte Krümmung der Längsachse der Matte einstellt. Soweit der aufgebrachte Estrich nicht unter die Alminium-Streifen gelangt, bleibt dort ein Luftpolster, welches die Wärmeisolier-ung nach unten verbessert und den Trittschall dämmt.

Nach einer weiteren bevorzugten Ausführung der Erfindung sind zwei mit Abstand nebeneinanderliegende Aluminium-Streifen vorgesehen. Es ergibt sich dabei die Möglichkeit, im Bedarfs-

/3

fall die Matten zum Teil einander abdeckend zu verlegen, derart, daß zwei Aluminium-Streifen einer Matte einen Aluminium-Streifen einer benachbarten Matte aufnehmen und sich auf diese Weise eine ununterbrochene Aluminium-Fläche ergibt.

Kupferrohr-Matten nach der Erfindung können auch mit einer schwarzen, also wärmeabsorbierenden Oberfläche als Absorber für Wärmepumpen und Solarheizungen verwendet werden.

Ein Ausführungsbeispiel der Erfindung und verschiedene Anwendungsmöglichkeiten werden im folgenden näher beschrieben unter Bezugnahme auf die beiliegenden Zeichnungen.

Fig. 1    zeigt eine Draufsicht auf ein erfindungsgemäß vorgefertigtes Kupferrohr (Kupferrohr-Matte)

Fig. 2    stellt in vergrößertem Maßstab einen Schnitt nach II-II von Fig. 1 dar

Fig. 3    zeigt perspektivisch eine solche Kupferrohr-Matte, zum Teil aufgewickelt, zum Teil eben aufgelegt

Fig. 4    ist ein Schnitt durch einen Fußboden, der zur Beheizung mit Kupferrohren nach der Erfindung ausgerüstet ist

Fig. 5    ist eine Draufsicht auf mehrere eng nebeneinander verlegte Kupferrohr-Matten nach Fig. 1

Fig. 6    zeigt zwei übereinander verlegte Kupferrohr-Matten

Fig. 7    stellt eine gestreckte Kupferrohr-Matte dar

0020894

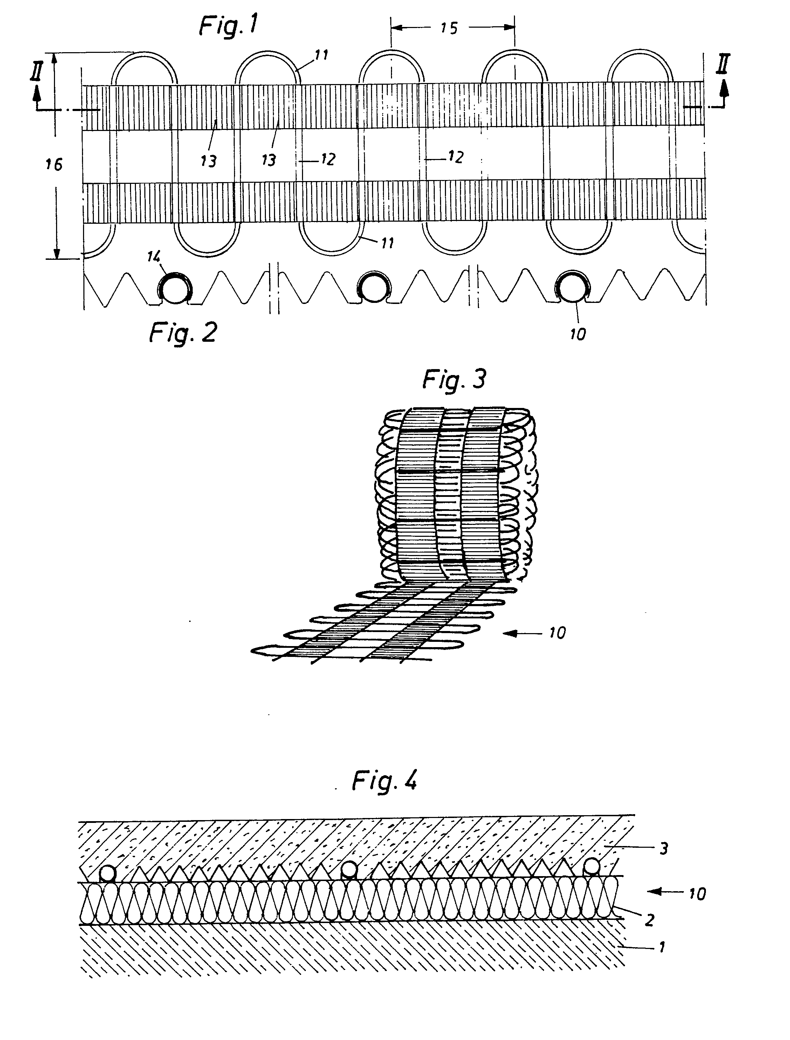

Die Kupferrohr-Matte nach der Erfindung wird aus einem Kupferrohr und zwei gewellten Aluminium-Streifen 13 fabrikatorisch hergestellt. Am Kupferrohr werden in abwechselnden Richtungen 180° Bögen 11 geformt, wobei zwischen den Bögen gerade Rohrabschnitte 12 bleiben (Mäanderfrom). Zwei gewellte Aluminium-Streifen 13 werden in einer Längsrichtung mit Abstand nebeneinander auf die geraden Rohrabschnitte 12 gelegt und jeweils mittels Stahlklammern 14 mit jedem geraden Rohrabschnitt wärmeleitend verbunden. Die Wellen der Aluminium-Streifen erstrecken sich in ihrer Höhe über den Rohrdurchmesser (Fig. 2). Der Platzbedarf der Kupferrohr-Matte in der Höhe ist also nicht größer als der Rohrdurchmesser. Bei dem Ausführungsbeispiel beträgt der Abstand 15 von Mitte Bogen zu Mitte Bogen an einer Seite 50 cm. Die maximale Breite 16 beträgt bei dem Ausführungsbeispiel 80 cm. Die Höhe der Wellen der Aluminium-Streifen beträgt 12,5 mm.

Die Kupferrohr-Matten können nach der Herstellung zwecks Lagerung und zum Versand aufgerollt werden. Bei der Montage werden sie durch Abrollen in eine Ebene gebracht, wie Fig. 3 zeigt.

Auf der Baustelle werden die Kupferrohr-Matten 10 (Fig. 4) auf Isoliermatten 2 aufgelegt, die auf dem Beton aufgebracht sind. Auf die Matten 10 wird ein Estrich 3 aufgebracht.

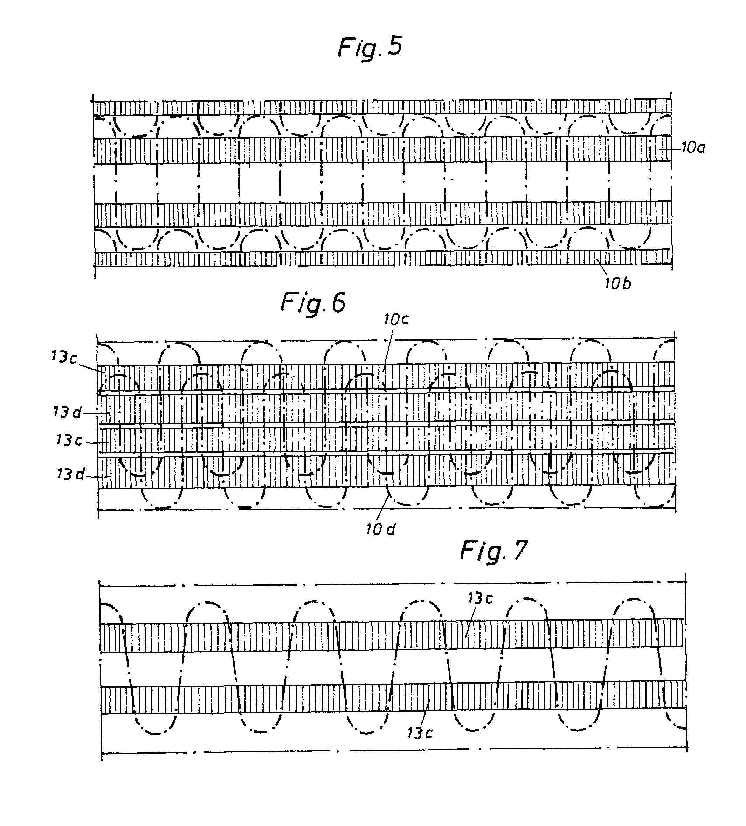

Nach Fig. 5 sind die Matten möglichst eng nebeneinander verlegt. Die Rohrbögen jeder Matte liegen dabei zwischen den Rohrbögen der danebenliegenden Matte.

0020894

Nach Fig. 6 sind die Matten zum Teil übereinander gelegt, derart, daß die Aluminium-Streifen der einen Matte jeweils zwischen den Aluminium-Streifen der benachbarten Matte liegen.
Durch die Aluminium-Streifen 13c, d wird eine
im wesentlichen durchgehende Fläche gebildet.

Nach Fig. 7 sind bei einer Kupferrohr-Matte
die Abschnitte 13e der Aluminium-Streifen, die
zwischen den Rohrbögen liegen gestreckt, während
die die Rohrbögen überspannten Streifenabschnitte nicht gestreckt sind. Dadurch werden die geraden Rohrabschnitte aus der parallelen Stellung
in eine abgewinkelte Stellung gebracht, und der
Abstand der Rohrbögen in Längsrichtung wird
größer. Bei dieser Verformung können Kupferrohr-
Matten nach Bedarf auf der Baustelle gelenkt werden. Durch Strecken des Aluminium-Streifens an
einer Seite kann man auch erreichen, daß die
Längsachse der Matte in eine Krümmung gebracht
wird.

0020894

Patentanwalt

**Dipl.-Ing. H. Fritz**

**5760 A R N S B E R G 1**
**Mühlenberg 74**

<u>Patentansprüche</u>

1. Vorgefertigtes Kupferrohr vorzugsweise für eine Fußbodenheizung, gekennzeichnet durch die nachfolgenden Merkmale:

   - es sind fortlaufend in wechselnden Richtungen 180° Bögen (11) gebildet

   - von Bogen zu Bogen sind parallele gerade Rohrabschnitte (12) gebildet

   - es ist mindenstens ein Aluminium-Streifen (13) vorgesehen, der auf den geraden Rohrabschnitten aufliegt, mit ihnen wärmeleitend verbunden ist

   - am Aluminium-Streifen sind im Bereich des Rohrdurchmessers Wellen geformt

2. Vorgefertigtes Kupferrohr nach Anspruch 1, dadurch gekennzeichnet, daß zwei Aluminium-Streifen (13) vorgesehen sind und zwischen ihnen ein Abstand etwa von der Breite eines Streifens eingehalten ist.

3. Vorgefertigtes Kupferrohr, dadurch gekennzeichnet, daß die Rohroberfläche und/oder die Streifenoberfläche schwarz (wärmeabsorbierend) ausgeführt ist.

*Fig. 1*

*II*

15

16

11

13   13   12   12

11

*Fig. 2*

14

10

*Fig. 3*

10

*Fig. 4*

3

10

2

1

## Fig. 5

— 10a

10b

## Fig. 6

10c

13c
13d
13c
13d

10d

## Fig. 7

13c

13c

**Europäisches Patentamt**

# EUROPÄISCHER RECHERCHENBERICHT

0020894

Nummer der Anmeldung

EP 80 10 1684

| | EINSCHLÄGIGE DOKUMENTE | | KLASSIFIKATION DER ANMELDUNG (Int Cl.) |
|---|---|---|---|
| Kategorie | Kennzeichnung des Dokuments mit Angabe, soweit erforderlich, der maßgeblichen Teile | betrifft Anspruch | |
| X | <u>FR - A - 1 247 270</u> (AMAT BARGUES) <br> * Seite 3, Absatz 1; Zusammenfassung 10; Abbildungen 1,2 * | 1,3 | F 24 D 3/00 |
| | <u>FR - A - 1 568 435</u> (KABELWERK WAGNER) <br> * Seite 4; Zeile 26 - Seite 5, Zeile 6; Abbildung 2 * | 1,2 | |
| | <u>CH - A - 534 998</u> (GUTEHOFFNUNGS-HUTTE) <br> * Patentansprüche; Abbildung 2 * | 1,2 | **RECHERCHIERTE SACHGEBIETE (Int. Cl.)** <br><br> F 24 D <br> F 24 J |
| | <u>DE - A - 2 702 337</u> (GUTEHOFFNUNGS-HUTTE) <br> * Patentanspruch 1; Abbildungen 1,2 * | 1 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14.08.1980 | VAN GESTEL |

EPA form 1503.1 06.78